(19) Europäisches Patentamt / European Patent Office / Office européen des brevets

(11) **EP 2 096 745 B1**

(12) **EUROPEAN PATENT SPECIFICATION**

(45) Date of publication and mention
of the grant of the patent:
**30.04.2014 Bulletin 2014/18**

(51) Int Cl.:
***H02M 3/158*** *(2006.01)*

(21) Application number: **08425116.4**

(22) Date of filing: **26.02.2008**

(54) **Multiphase master/slave DC-DC converter and corresponding DC-DC conversion method**

Mehrphasen-Master/Slave-Gleichstromwandler und zugehöriges Gleichstromwandlungsverfahren

Convertisseur CC-CC multiphase maître/esclave et procédé de conversion CC-CC correspondant

(84) Designated Contracting States:
**DE FR IT**

(43) Date of publication of application:
**02.09.2009 Bulletin 2009/36**

(73) Proprietor: **Magneti Marelli S.p.A.**
**20011 Corbetta (MI) (IT)**

(72) Inventor: **Nepote, Andrea**
**10078 Venaria Reale (Torino) (IT)**

(74) Representative: **Notaro, Giancarlo et al**
**Buzzi, Notaro & Antonielli d'Oulx**
**Via Maria Vittoria 18**
**10123 Torino (IT)**

(56) References cited:
**US-A- 5 122 726**

- **SIRI K ET AL: "Analysis and evaluation of current-sharing control for parallel-connected DC-DC converters taking into account cable resistance" AEROSPACE APPLICATIONS CONFERENCE, 1995. PROCEEDINGS., 1995 IEEE ASPEN, CO, USA 4-11 FEB. 1995, NEW YORK, NY, USA,IEEE, US, 4 February 1995 (1995-02-04), pages 29-48, XP010147574 ISBN: 978-0-7803-2473-2**

**Description**

The present invention provides a DC-DC converter apparatus according to claim 1 and a DC-DC conversion method according to claim 12. Preferred embodiments are defined in the dependent claims.

A DC-DC converter is a circuit that converts a source of direct current from one voltage to another. This type of converter constitutes a class of power converters. The DC-DC converters are important in mobile electronic instruments such as cellular phones and laptop computers that are powered by batteries. Such electronic instruments often contain various subcircuits wherein each requires a different voltage level from that provided by the battery (typically higher or lower than the battery voltage, and sometimes also negative voltages). Furthermore, the battery voltage decreases as power is withdrawn. DC-DC converters provide a method for generating different controlled voltage levels starting from a battery with variable voltage, in this way saving space and avoiding the use of many batteries to provide energy to the different parts of the instrument.

Of particular interest in the field of the DC-DC converters are the multi-phase, or interleaved types, which allow notable advantages to the power devices (active and passive) connected to them. In fact, in such types each branch must manage a fraction of the current provided, allowing in this way the use of components of reduced dimensions and easier industrialisation since they are surface mounted, characteristics of reduced mass and distributed dissipation. The greatest advantage of such type consists of the fact that it is possible to notably reduce the number of input condensers, in particular for the step-down type structures, that is, those converting a voltage level into a lower one, and output condensers, in particular for the step-up type structures, that is, those converting a voltage level into a higher one, by means of the fact that each branch is required to manage reduced peak and effective currents with respect to the mono-phase case.

Controllers for step-down type converters, often also called Buck converters, of the multiphase type are often employed for the powering of personal computer mother boards, while the cases of controllers for step-up converters, often also called boost, of multi-phase type are more rare and expensive. In the field of automotive applications, for example voltage stabilisers for starters, implementations of this kind are even more rare and expensive.

Therefore, it is convenient to realise multi-phase type converter apparatuses employing low-cost mono-phase components conveniently interfaced for such purpose.

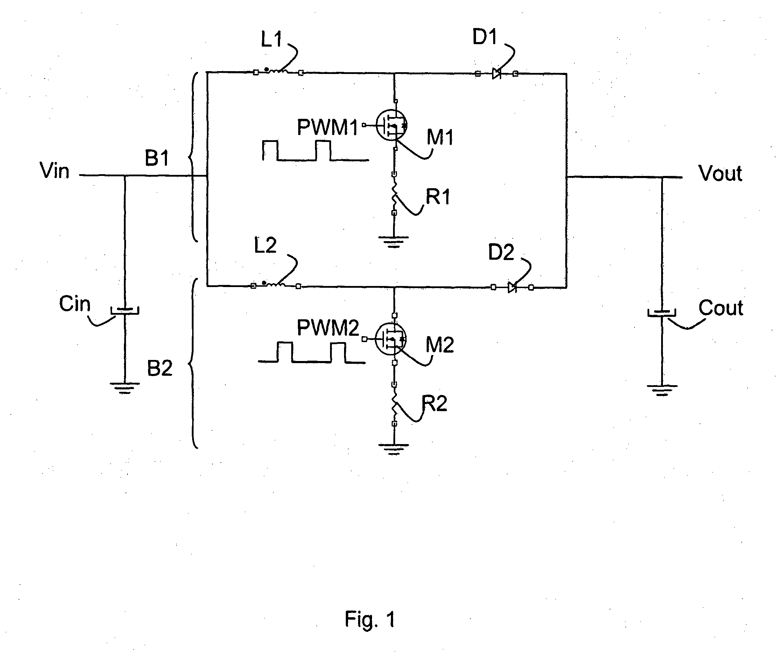

Figure 1 shows a general scheme of a boost-type DC-DC converter apparatus with multi-phase architecture including a number of phases n equal to 2. Such converter apparatus, indicated as a whole with the reference 10, receives an input voltage Vin to an input terminal and presents an input condenser Cin placed in parallel between the input terminal and ground. A first branch B1 of the multi-phase architecture and a second branch B2 depart in parallel from such input terminal. The first branch B1 includes an input inductor L1, a MOSFET transistor M1 connected with the drain downstream of the input inductor L1 and the source grounded through a resistance R1 so to operate as a switch to ground following the piloting of a first pulse width signal PWM1 (that is, a Pulse Width Modulation-type signal). A flyback diode D1 is located in series downstream between the MOSFET M1 drain and the output terminal wherein an output voltage Vout is withdrawn from the converter apparatus 10.

A second branch B2 parallel to the first branch B1 has an analogous arrangement including a respective input inductor L2, a respective MOSFET M2 commanded by a respective second pulse width signal PWM2, a respective flyback diode D2 and a respective resistance R2 between source and ground. An output condenser Cout is then located between the output terminal and ground. Naturally, the setting of the pulse width signals PWM1 and PWM2 from the respective controllers, not shown in Figure 1, determines the functioning characteristics and the load distribution.

Herein we specifically refer to current mode-type controllers, that is, those having an internal regulation loop of the inductor current to provide good load distribution among the various branches. Furthermore, it is important that the branches can be synchronised, that is, that they are provided with an input terminal for the setting of the frequency and the phase required for each branch. Both requirements are fulfilled by a great number of controllers commercially available on the market.

Therefore, the architecture illustrated with reference to figure 1 is, more generally, made of n branches controlled by n controller devices out of phase by 360°/n. Each controller device is provided with an internal reference voltage with which the feedback signal returned from the output, suitably scaled through a resistance divider is normally compared. However, such a configuration has the inconvenience that controllers with lower reference voltages will tend to remain inactive, to the detriment of those that have a higher reference voltage. In this way, the benefits of the multi-phase architecture are lost, in addition to causing some branches to operate under higher load conditions with respect to the conditions for which they were dimensioned. In order to obtain a good current load distribution with such a configuration one would need to differentiate the voltage feedbacks providing two separated voltage dividers calibrated so to recover the reference imbalance. However, it is clear that such solution is not particularly convenient for industrial production since it would entail performing fine line calibrations and would not guarantee functionality under all electrical and environmental conditions of use.

Instead, a known solution adopted in this field is to provide for the employment of a controller device in master function with respect to the comparison between internal reference and value reported as feedback from the output, that is, delegating to such component the task of generating the reference voltage and of comparing it with the feedback signal from the output. Since, in general, the error amplifier, that is, the one that amplifies the error between the reference value and the feedback signal, present in such controllers is of the transconductance type, it is possible to take the voltage at the output of such an error amplifier of the master controller device and return it directly, or through a voltage follower, to the output of the corresponding error amplifier present in the second controller device, operating as a slave. In this way, the two circuits are forced to modulate their pulse width signals piloting the power MOSFFTs so to regulate the peak current itself through the internal current loop (current mode), apart from minor differences due to the tolerance of some components, such as, in particular, sensing resistors. A similar solution is applied in all cases in which the error amplifier is of the transconductance amplifier-type since, the output being a current generator it is possible to force the output itself to a suitable voltage. Although there are components in which the error amplifier is a voltage amplifier, so that it is not possible to force its output.

**Exemplary of such master slave converters is document** US 5 122 726 A) **which discloses implementative details of converters and current-mode PWM regulators.**

**The document "**Analysis and evaluation of current-sharing control for parallel-connected DC-DC converters taking into account cable resistance" by Siri et al. AEROSPACE APPLICATION CONFERENCE, 1995. PROCEEDINGS., 1995 IEEE ASPEN, CO, USA 4-11 FEB. 1995, NEW YORK, NY, USA,IEEE, US, 4 February 1995 (1995-02-04), pages 29-48, **discloses a DC-DC converter which applies master-slave technique, using a complex control strategy which involves comparing the current in the two branches through a scaling of the master current and a frequency compensation to generate an error signal which adjusts the voltage on the slave branch.**

The present invention has the object of realising a DC-DC converter solution with a multi-phase architecture having at least one controller device in master role for control of the drive signal that is applicable even when the error amplifier of the control device is not a transconductance amplifier.

According to the present invention, such object is achieved by means of a converter apparatus, as well as a corresponding conversion method having the characteristics specifically recalled in the annexed claims.

The invention will now be described with reference to the enclosed drawings, provided by way of nonlimiting example only, wherein:

- Figure 1 has already been illustrated;
- Figure 2 represents a basic circuit diagram of a first embodiment of a module of the converter apparatus according to the invention;
- Figure 3 represents a detailed circuit diagram of the first embodiment in figure 2;
- Figure 4 represents a detailed circuit diagram of a second embodiment of a module of a converter apparatus according to the invention.

Briefly, the proposed converter apparatus includes, within a multi-phase architecture provided with a plurality of phase branches and controller devices for each phase branch, the delegating of the master controller function concerning the comparison between the reference voltage and reading of the feedback signal of the converter apparatus to at least one first controller device.

Filtering of the PWM drive signals of the power MOSFETs outputted from the controller devices is provided, for example through simple RC networks, for the purpose of obtaining filtered signals representing an estimate of the average value and, consequently of the respective duty cycle, of the different drive signals to send to the respective power MOSFETs on the respective phase branches of the multi-phase architecture. The filtered signal representative of the estimate of the average value of the drive signal of the master controller device is assumed as reference of a dedicated control circuit. The filtered signal representative of the estimated average value of the drive signal of the slave controller device to be regulated is fed back to said dedicated control circuit. The error signal amplified by the circuit, constituting the value of the manipulation, is sent to the feedback input of the slave controller device. In this way, the dedicated control circuit operates as an equaliser of the duty cycle and, apart from differences introduced by the tolerances of the system components, of the currents modulated in the phase branches, providing to the slave controller device the feedback voltage signal required to reproduce the duty cycle of the drive signal of the master controller device independently from its own internal reference. Substantially, the dedicated control circuit performs a continuous calibration of the feedback network to recover the difference of the references.

Therefore, in substance, the converter apparatus according to the invention includes a circuit arrangement configured to receive signals estimating the comparison signals or error between the reference voltage and the reading of the feedback signal of the converter apparatus, as well as a control loop receiving in input the estimator signals of the comparison signals and feedback operating to reduce to zero the differences between the comparison signals of the controllers providing a control signal as feedback signal returned to the feedback input of the slave controller device.

In a first embodiment, means are provided to estimate a modulation level associated with pulse width modulated drive signals of the master device and of one or more slave controller devices respectively, a feedback control loop receiving in input the estimated modulation levels of the master controller and of the slave controller and feedback operating to reduce to zero the differences between said modulation levels providing a control signal, error function between the master and slave modulation levels, as feedback signal returned to the feedback input of the controller device operating in slave mode.

In a second embodiment, a circuit is provided for the withdrawal of the error signals between reference voltage and feedback voltage which are provided as input values to be compared to said control loop (11) which feedback operates to reduce to zero the differences between the error signals providing a control signal as feedback signal returned to the feedback input of the slave controller device.

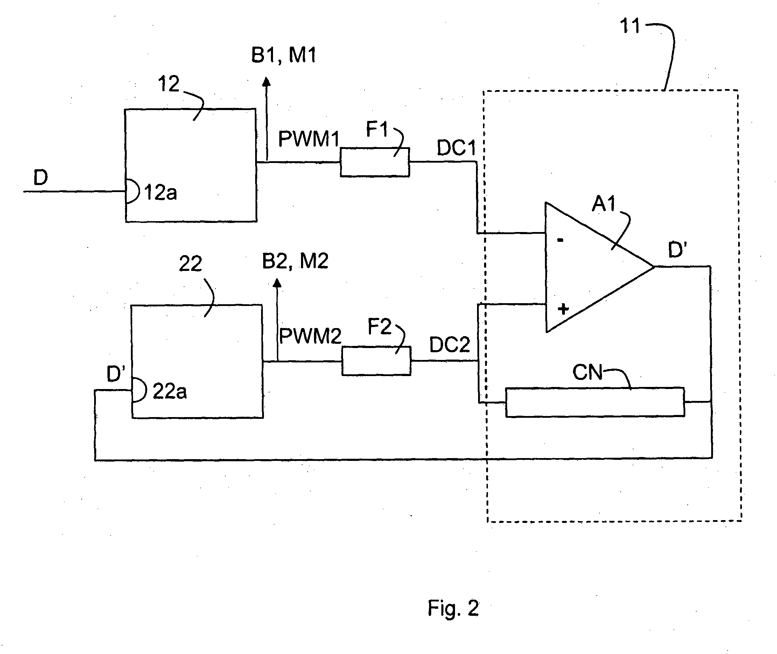

Figure 2 represents a circuit diagram of the circuit solution according to the invention operating the control of the drive signals of the controller devices. A first master controller device 12 is shown, providing the first drive signal PWM1 in output. Such PWM1 drive signal is provided to the first branch B1, that is, to the piloting input of the MOSFET M1 of the circuit exemplified in figure 1. In the same way, a second slave controller device 22 provides the second drive signal PWM2 to the MOSFET M2 for the B2 branch.

In figure 2 the drive signal PWM1 output from the first master controller device 12 is also taken and brought to a first filter F1, for example a simple RC network, allowing a filtered signal DC1 to be obtained, in particular an integrated signal, which estimates the duty cycle of the first drive signal PWM1. The second drive signal PWM2 in output from the second slave controller device 22 is brought to a second filter F2 to obtain a second filtered signal DC2. The respective filtered signals DC1 from the first filter F1 and DC2 from the second filter F2 are respectively sent to a feedback loop, indicated as a whole with 11, and more specifically to the inverting terminal and to the positive terminal of an operational amplifier A1. Such operational amplifier A1 provides at its output a dedicated control signal D'. Such dedicated control signal D' is returned to a feedback input 22a of the second slave controller 22, while the first master controller device 12 receives at its input the voltage feedback from the output of the entire circuit.

Then, the first master controller 12 corrects its pulse width modulation in function of a feedback signal D relative to the converter complex. The second slave controller 22 receiving the dedicated control signal D' corresponding substantially to the amplified error between the filtered DC1 and DC2 estimator signals of the respective duty cycles, corrects its own modulation so to bring the value of the slave filtered signal DC2 to coincide with the value of the master filtered signal DC1 and reduce to zero the error.

A compensation network CN can be conveniently placed between the output terminal of the operational amplifier A1 and its inverting terminal.

The proposed solution advantageously allows the extension of the DC-DC converter structure with multiphase architecture having at least one controller device in master role, presenting in itself advantages for the adoption of low cost integrated circuits and provided for simple mono-phase type, also when the error amplifier of the controller device is not a transconductance amplifier or in any case when it does not have a structure such to allow forcing of the output voltage.

Of course, the cases exemplified for two phases and two branches can easily be extended by the person skilled in the art to a configuration of n phases and n branches.

For the estimate of the duty cycle of the drive signal any filtering circuit complex or estimate circuit, also including microprocessors, compatible with the presented solution may be used.

In the same way, the operational amplifier for locking the slave drive signal to the master drive signal could naturally be substituted by an equivalent circuit, apt to realising a control loop with the purpose of reducing to zero the duty cycle differences by acting on the feedback input of the slave branch.

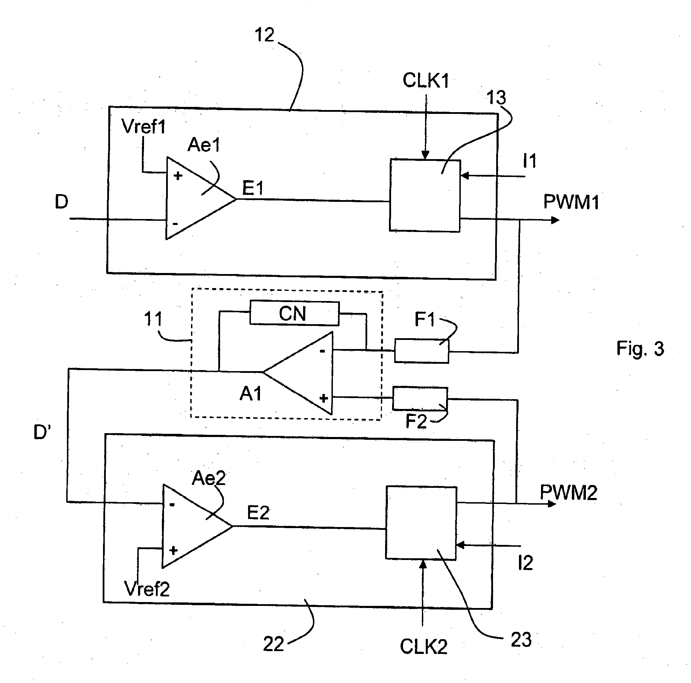

Figure 3 represents a more detailed scheme of the circuit solution in Figure 2. It can be observed from such scheme how the two controller devices, 12 and 22 respectively, are of the mono-phase type timed using a respective first clock signal CLK1 and a second clock signal CLK2, operating on the same frequency and out of phase by 180°. Each controller device 12 or 22 is provided with a respective reference voltage Vref1 or Vref2, internal to the integrated circuit through which the controller device 12 or 22 is realised, and receives a feedback voltage signal D from the output. In the case of the master controller device 12, such feedback signal D reaches the corresponding input 12a corresponding to an inverting terminal of an error amplifier Ae1, included in such master controller device 12, which receives the reference voltage Vref1 in input to a positive terminal, to perform a comparison and provide an error signal E1 to a modulator 13 operating under the control of the first clock signal CLK1 to provide the first pulse-width signal PWM1. The error amplifier Ae1 represented in Figure 3 is a voltage amplifier. The slave controller device 22 replicates the structure of the master controller device 12 including, in fact, an error amplifier Ae2, receiving the dedicated control signal D' through the input 22a at the inverting terminal and the second reference voltage Vref2 at the positive terminal, to compare them and to provide a second error signal E2 to a second modulator 23 operating under the control of the second clock signal CLK2 to provide the second pulse-width signal PWM2.

Then the modulators 13 and 23 receive respective current feedback signals I1 and I2 from the output of the converter apparatus.

The dedicated control signal D' is then obtained through the filters F1 and F2 and the feedback loop 11, as was already illustrated with reference to Figure 2.

As was shown previously, in this case the feedback input 22a of the second slave controller 22 is set by the dedicated control circuit through the feedback loop 11 so that the duty cycle of the slave controller 22 tends to be equal to the duty cycle of the master controller 12. Such operation is equivalent to reducing to zero the difference between the two internal references Vref1 and Vref2, analogously to what could be performed in a manual calibration varying the gain of the feedback of the slave controller 22.

The solution described in Figures 2 and 3 may at times imply problems in the correct distribution of the load, since it functions similarly to a "Voltage Mode" type of control, since setting a duty cycle on the slave branch B2 is equivalent to setting a gain between the output voltage and the local reference, but it does not involve an action on the distribution of the current load, such distribution being a function of the dissipative parasite parameters in the two branches B1 and B2.

For simplicity, are exclusively considered losses due to serial resistance of the inductors (the other components being considered ideal). The controller device 12 of the master branch B1 sets a duty cycle value not only in function of the input Vin and output Vout voltages, but also of a first voltage drop $\delta 1$ provoked by the current input at the serial resistance ends of the inductor L1:

$$\delta 1 = 1 - (V_{in} - R_{L1} * I_{L1}) / V_{out} \qquad (1)$$

Analogously, the operation of the slave controller device 22, that is, a second voltage drop $\delta 2$ on the L2 inductor of the slave branch B2, is described by the following equation, since operating between the same input and output voltages and with the same duty cycle:

$$\delta 2 = 1 - (V_{in} - R_{L2} * I_{L2}) / V_{out} \qquad (2)$$

In the equations (1) and (2) $I_{L1}$ and $I_{L2}$ represent the currents in the inductors L1 and L2, while $R_{L1}$ and $R_{L2}$ represent the resistances of such L1 and L2 inductors. Setting the equations equal (1) and (2) the following relationship is obtained:

$$R_{L1} * I_{L1} = R_{L2} * I_{L2} \qquad (3)$$

from which:

$$I_{L2} / I_{L1} = R_{L1} / R_{L2} \qquad (4)$$

Therefore, the ratio between the inductor currents $I_{L1}$ and $I_{L2}$ in the two branches B1 and B2 is inversely proportional to the ratio between the serial resistances $R_{L1}$ and $R_{L2}$ of such inductors L1 and L2.

Such parameter (as well as other dissipative parameters acting on the current distribution) is difficult to control and may be subject to non-negligible variations due to dispersions caused by the productive process and by the operational conditions (ex. temperature). Therefore, the ratio between the currents managed by the two branches B1 and B2 is equally subjected to such dispersions, even under equilibrated duty cycle conditions. The fact that the slave controller 12 may substantially loose its own Current Mode controller characteristics also has negative consequences on the behaviour at the transistors and on system stability.

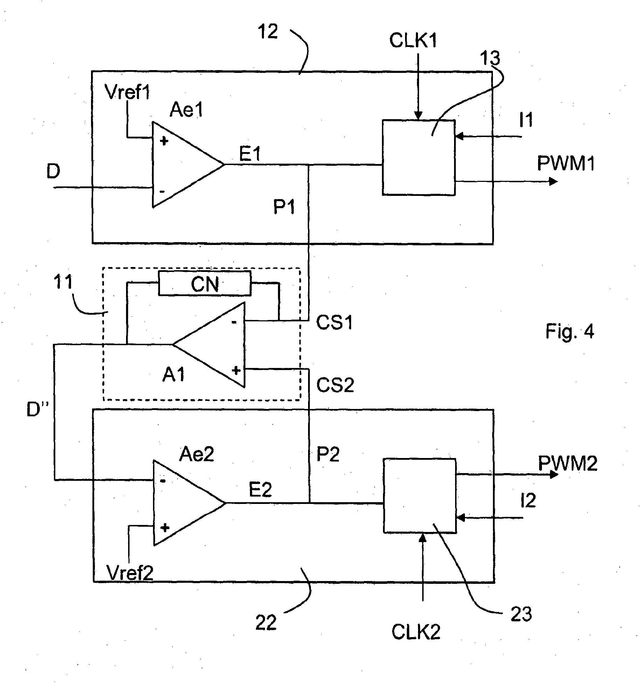

Therefore, in Figure 4 the block scheme of an additional circuit solution is represented, which solves such inconveniences concerning load distribution.

The structure is similar to that proposed in Figures 2 or 3, with the difference that, the signals returned to the inputs of the added control circuit, which includes the feedback 11, in this case are not the DC1 and DC2 signals representative of the duty cycle of the drive signals PWM1 and PWM2 sent to the two branches B1 and B2, but instead they are withdrawn from the outputs of the two error amplifiers.

More specifically, the controllers 12 and 22 are provided with respective withdrawing branches P1 and P2, which withdraw the respective error signals E1 and E2 and provide them as signals to be compared CS1 and CS2 to the inputs of the operational amplifier A1 of the loop 11. Consequently, the circuit in Figure 4 does not include the F1 and F2 filters for obtaining the filtered signals DC1 and DC2, which estimate the duty cycle of the drive signals PWM1 and PWM2. In fact, such filters F1 and F2 in Figure 3 can be seen as circuits apt to estimating the comparison signal constituted by the error signal E1 or E2. In fact, the duty cycle of the drive signal PWM1 or PWM2 is proportional to the value of the error signal E1 or E2.

Instead, in the case of the circuit in Figure 4, the estimate of the comparison signal is obtained by the withdrawing of the error signals E1 and E2 themselves through the withdrawal branches P1 and P2, which in Figure 4 are simple connections between the output of the error amplifiers Ae1 or Ae2 and the inputs of the operational amplifier A, but in general they can also be more complex circuits possibly including compensation elements which, introduced in the reaction loop 11 fulfil the goal of equilibrating the error signal E2 of the slave branch B2 with respect to the error signal E1 of the master branch B1.

Such error signals E1 and E2, in a Current Mode-type of control scheme, in fact represent, apart from possible compensation ramps, the set points of the two commuted peak current loops. The added control circuit including the feedback loop 11 operates in the sense of equilibrating such error signals (and therefore the respective currents) acting on the feedback input of the slave controller device 22, which provides a feedback signal D" in output from the operational amplifier A1 achieving in this way a result similar to that obtainable, for example, by short circuiting such signals. The precision with which the peak current of the slave branch B2 reproduces the peak current of the master branch B1 depends exclusively on the precision of the internal current loops, which in turn depend substantially on the precision of the sensing resistances employed to detect such currents. The sensing resistances can have very strict tolerances and high temperature stability, in this way guaranteeing a good distribution of current in all situations.

Since in such configuration also the slave controller 22 maintains its own characteristic of Current Mode controller, good behaviour at the transistors and system stability are guaranteed.

**Claims**

1.  A DC-DC converter apparatus with multi-phase architecture including
    a plurality of phase branches (B1, B2) disposed to receive respective drive signals (PWM1, PWM2) from corresponding controller devices (12, 22) configured to generate said pulse width modulated drive signal (PWM1, PWM2), each of said controller devices (12, 22) including a respective circuit module (Ae1, Ae2) configured to

    compare an internal reference voltage (Vref1, Vref2) with a feedback signal (D; D'; D'') returned to a feedback input (12a, 22a) from an output of the converter apparatus, and
    provide a comparison signal (E1, E2) to control a modulation level applied to the respective drive signal (PWM1, PWM2),

    at least one controller device (12) among said corresponding controller devices (12) operating as master with respect to said operation of providing a comparison signal (E1, E2) able to control a modulation level and the remaining among said corresponding controller devices (22) operating with respect to said operation of providing a comparison signal (E1, E2) in slave mode with respect to said master controller device (12),
    each of said controller devices (12, 22) is provided with the respective internal reference voltage (Vref1, Vref2) at a second terminal, and
    **characterised in that**
    said converter apparatus also includes a circuit arrangement (F1, F2; P1, P2) configured to obtain estimator signals (DC1, DC2; CS1, CS2) of said comparison signals (E1, E2),
    a control loop (11) receiving in input said estimator signals of said comparison signals (DC1, DC2; CS1, CS2) and feedback operating to reduce to zero the differences between said comparison signals (E1, E2) providing a control signal (D'; D'') as feedback signal returned to the feedback input (22a) of said slave controller device (22).

2.  An apparatus according to claim 1, **characterised in that** said control loop (11) receives an estimator signal of the comparison signal (DC1; CS1) of the master device (12) as reference signal.

3.  An apparatus according to claim 2, **characterised in that** said feedback control loop (11) includes an operational amplifier (A1) receiving at an inverting terminal the estimator signal of the comparison signal (DC1; CS1) which controls the drive signal (PWM1) of the master controller device (12) and to a non-inverting terminal the estimator signal of the comparison signal (DC2; CS2) which controls the drive signal (PWM2) of the slave controller device (22).

4.  An apparatus according to one or more of the previous claims, **characterised in that** said controller devices (12, 22) include an internal current regulation loop (I1, I2).

5. An apparatus according to one or more of the previous claims, **characterised in that** said circuit module (Ae1, Ae2) configured to compare a reference voltage (Vref1, Vref2) with a feedback signal (D; D'; D'') returned to a feedback input (12a, 22a) from an output of the converter apparatus includes a voltage amplifier.

6. An apparatus according to one or more of the previous claims, **characterised in that** said circuit arrangement (F1, F2; P1) configured to obtain estimator signals (DC1, DC2; CS1, CS2) of said comparison signals (E1, E2) includes means (F1, F2) to estimate the modulation levels associated with said pulse-width modulated drive signals (PWM1, PWM2) of the master device (12) and the remaining controllers (22), respectively, and that said control loop (11) receives as input said modulation levels and feedback operates to reduce to zero differences between said modulation levels (DC1, DC2) providing a control signal (D') as a feedback signal returned to the feedback input (22a) of said slave controller device (22).

7. An apparatus according to the previous claim, **characterised in that** said means (F1, F2) for estimating the modulation levels (DC1, DC2) associated with said drive signals (PWM1, PWM2) include an RC filtering network.

8. An apparatus according to one or more of the previous claims from 1 to 5, **characterised in that** said circuit arrangement (F1, F2; P1) configured to obtain estimator signals (DC1, DC2; CS1, CS2) of said comparison signals (E1, E2) includes a withdrawing circuit (P1, P2) configured to draw said comparison signals (E1, E2) in output from said respective circuit module (Ae1, Ae2) and provide corresponding signals for comparison (CS1, CS2) in input to said control loop (11) feedback operating to reduce to zero the differences between said comparison signals (E1, E2) providing a control signal (D'') as feedback signal returned to the feedback input (22a) of said slave controller device (22).

9. An apparatus according to the previous claim, **characterised in that** said comparison signals (E1, E2) represent Current Mode type control scheme set points-of two peak switching current loops.

10. An apparatus according to claim 6 or 8, **characterised in that** said circuit module (Ae1, Ae2) configured to compare a reference voltage (Vref1, Vref2) with a feedback signal (D; D'') includes an error amplifier (Ae1, Ae2) and said feedback input (12a, 22a) is an input of said error amplifier (Ae1, Ae2).

11. An apparatus according to the previous claim, **characterised in that** each of said controller devices (12, 22) includes a respective modulator device (13, 23) receiving from said error amplifier (Ae1, Ae2) a respective comparison signal (E1, E2) and generating said respective drive signal (PWM1, PWM2) under the control of a respective clock signal (CLK1, CLK2).

12. A DC-DC conversion method with multi-phase architecture including the operations of distributing a load on to a plurality of phase branches (B1, B2) piloted by respective drive signals (PWM1, PWM2), generating said pulse width modulation drive signals (PWM1, PWM2) controlling the respective modulation level (DC1, DC2) by comparing a reference voltage (Vref1, Vref2) with a feedback signal (D; D'; D'') returned from the output of the converter apparatus, said modulation level controlling operation including the definition of at least one master branch (B1) in said plurality of phase branches and one or more slave branches (B2), providing each of said controller devices (12, 22) with a respective internal reference voltage (Vref1, Vref2) at a second terminal
   **characterised in that**
   it includes obtaining (F1, F2; P1, P2) estimator signals (DC1, DC2; CS1, CS2) of said comparison signals (E1, E2) of the master branch (B1) and of one or more of the slave branches (B2) respectively,
   it operates (11) a feedback control loop receiving estimator signals (DC1, DC2; SC1, SC2) of said comparison signals (E1, E2) to reduce to zero the differences between said comparison signals (E1, E2) providing a control signal (D'; D'') as feedback signal for the generation of the drive signal (PWM2) of the slave branch (B2).

13. A method according to claim 12, **characterised in that** it includes operating said feedback control loop (11) employing the estimator signal (DC1; CS1) of the comparison signal (E1) of the master device (12) as reference signal for the feedback loop (11).

14. A method according to claim 12 or 13, **characterised in that** said operation of obtaining (F1, F2; P1, P2) estimator signals (DC1, DC2; CS1, CS2) includes estimating the modulation level (DC1, DC2) associated with said pulse width modulated drive signals (PWM1, PWM2) of the master device (12) and of one or more of the slave controller devices (22) respectively and that said control loop (11) receives as input said modulation levels (DC1, DC2) and feedback operates to reduce to zero the differences between said modulation levels (DC1, DC2) providing a control signal (D') as feedback signal returned to the feedback input (22a) of said slave controller device (22).

15. A method according to claim 12 or 13, **characterised in that** the operation of obtaining (F1, F2; P1, P2) estimator signals (DC1, DC2; CS1, CS2) includes withdrawing (P1, P2) said comparison signals (E1, E2) and providing them as corresponding signals for comparison (CS1, CS2) in input to said control loop (11) feedback operating to reduce to zero the differences between said comparison signals (E1, E2) providing a control signal (D'') as feedback signal returned to the feedback input (22a) of said slave controller device (22).

**Patentansprüche**

1. Gleichstromwandlergerät mit Mehrphasenarchitektur, mit einer Vielzahl von Phasenästen (B1, B2), die angeordnet sind, um jeweilige Ansteuersignale (PWM1, PWM2) von entsprechenden Steuerungsvorrichtungen (12, 22), die für das Erzeugen der pulsbreitenmodulierten Ansteuersignale (PWM1, PWM2) ausgestaltet sind, zu empfangen, wobei jede der Steuerungsvorrichtungen (12, 22) ein jeweiliges Schaltungsmodul (Ael, Ae2) besitzt, das ausgestaltet ist, eine interne Referenzspannung (Vref1, Vref2) mit einem Rückführsignal (D; D'; D''), das von einem Ausgang des Wandlergerätes zu einem Rückführeingang (12a, 22a) zurückgesendet wird, zu vergleichen und ein Vergleichssignal (E1, E2) bereitzustellen, um einen an das jeweilige Ansteuersignal (PWM1, PWM2) angelegten Modulationspegel zu steuern, wobei mindestens eine Steuerungsvorrichtung (12) unter den entsprechenden Steuerungsvorrichtungen (12) als Master in Bezug auf den Vorgang des Bereitstellens eines Vergleichssignals (E1, E2), das fähig ist, einen Modulationspegel zu steuern, arbeitet und die übrigen unter den entsprechenden Steuerungsvorrichtungen (22) in Bezug auf den Vorgang des Bereitstellens eines Vergleichssignals (E1, E2) im Slave-Modus in Bezug auf die Master-Steuerungsvorrichtung (12) arbeiten, wobei jede der Steuerungsvorrichtungen (12, 22) mit der jeweiligen internen Referenzspannung (Vref1, Vref2) an einer zweiten Klemme versorgt wird, und **dadurch gekennzeichnet, dass** das Wandlergerät auch eine Schaltungsanordnung (F1, F2; P1, P2), die ausgestaltet ist, Schätzsignale (DC1, DC2; CS1, CS2) der Vergleichssignale (E1, E2) zu erhalten, aufweist, wobei ein Regelkreis (11) als Eingang die Schätzsignale der Vergleichssignale (DC1, DC2; CS1, CS2) empfängt und eine Rückführung arbeitet, um die Unterschiede zwischen den Vergleichssignalen (E1, E2) auf Null zu verringern, mit Bereitstellung eines Steuerungssignals (D'; D'') als Rückführsignal, das zum Rückführeingang (22a) der Slave-Steuerungsvorrichtung (22) zurückgesendet wird.

2. Gerät nach Anspruch 1, **dadurch gekennzeichnet, dass** der Regelkreis (11) ein Schätzsignal des Vergleichssignals (DC1; CS1) der Master-Vorrichtung (12) als Referenzsignal empfängt.

3. Gerät nach Anspruch 2, **dadurch gekennzeichnet, dass** der Rückführregelkreis (11) einen Operationsverstärker (A1) besitzt, der an einer invertierenden Klemme das Schätzsignal des Vergleichssignals (DC1; CS1) empfängt, welches das Ansteuersignal (PWM1) der Master-Steuerungsvorrichtung (12) steuert, und zu einer nicht invertierenden Klemme das Schätzsignal des Vergleichssignals (DC2; CS2), welches das Ansteuersignal (PWM2) der Slave-Steuerungsvorrichtung (22) steuert.

4. Gerät nach einem oder mehr der vorangegangenen Ansprüche, **dadurch gekennzeichnet, dass** die Steuerungsvorrichtungen (12, 22) einen internen Stromregelkreis (I1, 12) besitzen.

5. Gerät nach einem oder mehr der vorangegangenen Ansprüche, **dadurch gekennzeichnet, dass** das Schaltungsmodul (Ael, Ae2), das ausgestaltet ist, eine Referenzspannung (Vref1, Vref2) mit einem Rückführsignal (D; D'; D''), das von einem Ausgang des Wandlergerätes zu einem Rückführeingang (12a, 22a) zurückgesendet wurde, zu vergleichen, einen Spannungsverstärker besitzt.

6. Gerät nach einem oder mehr der vorangegangenen Ansprüche, **dadurch gekennzeichnet, dass** die Schaltungsanordnung (F1, F2; P1), die ausgestaltet ist, Schätzsignale (DC1, DC2; CS1, CS2) der Vergleichssignale (E1, E2) zu erhalten, Mittel (F1, F2) besitzt, um die mit den pulsbreitenmodulierten Ansteuersignalen (PWM1, PWM2) der Master-Vorrichtung (12) bzw. der übrigen Steuerungen (22) verbundenen Modulationspegel zu schätzen, und dadurch, dass der Regelkreis (11) als Eingang die Modulationspegel empfängt und eine Rückführung arbeitet, um Unterschiede zwischen den Modulationspegeln (DC1, DC2) auf Null zu verringern, mit Bereitstellung eines Steuerungssignals (D') als Rückführsignal, das zum Rückführeingang (22a) der Slave-Steuerungsvorrichtung (22) zurückgesendet wird.

7. Gerät nach dem vorangegangenen Anspruch, **dadurch gekennzeichnet, dass** die Mittel (F1, F2) zum Schätzen der mit den Ansteuersignalen (PWM1, PWM2) verbundenen Modulationspegel (DC1, DC2) ein RC-Filternetz besitzen.

8. Gerät nach einem oder mehr der vorangegangenen Ansprüche 1 bis 5, **dadurch gekennzeichnet, dass** die Schaltungsanordnung (F1, F2; P1), die ausgestaltet ist, Schätzsignale (DC1, DC2; CS1, CS2) der Vergleichssignale (E1, E2) zu erhalten, eine Ausziehschaltung (P1, P2) besitzt, die ausgestaltet ist, die Vergleichssignale (E1, E2) als Ausgang aus dem jeweiligen Schaltungsmodul (Ael, Ae2) zu ziehen und entsprechende Signale zum Vergleich (CS1, CS2) als Eingang dem Regelkreis (11) zuzuführen, wobei eine Rückführung arbeitet, um die Unterschiede zwischen den Vergleichssignalen (E1, E2) auf Null zu verringern, mit Bereitstellung eines Steuerungssignals (D'') als Rückführsignal, das zum Rückführeingang (22a) der Slave-Steuerungsvorrichtung (22) zurückgesendet wird.

9. Gerät nach dem vorangegangenen Anspruch, **dadurch gekennzeichnet, dass** die Vergleichssignale (E1, E2) Sollwerte von zwei Spitzenschaltstromkreisen in der Art einer Current Mode-Steuerung darstellen.

10. Gerät nach Anspruch 6 oder 8, **dadurch gekennzeichnet, dass** das Schaltungsmodul (Ael, Ae2), das ausgestaltet ist, eine Referenzspannung (Vref1, Vref2) mit einem Rückführsignal (D; D'') zu vergleichen, einen Fehlerverstärker (Ael, Ae2) besitzt und der Rückführeingang (12a, 22a) ein Eingang des Fehlerverstärkers (Ael, Ae2) ist.

11. Gerät nach dem vorangegangenen Anspruch, **dadurch gekennzeichnet, dass** jede der Steuerungsvorrichtungen (12, 22) eine jeweilige Modulatorvorrichtung (13, 23) besitzt, die von dem Fehlerverstärker (Ael, Ae2) ein jeweiliges Vergleichssignal (E1, E2) empfängt und unter der Steuerung eines jeweiligen Taktsignals (CLK1, CLK2) das jeweilige Ansteuersignal (PWM1, PWM2) erzeugt.

12. Gleichstromwandlungsverfahren mit Mehrphasenarchitektur, mit den Vorgängen des Verteilens einer Last auf eine Vielzahl von durch jeweilige Ansteuersignale (PWM1, PWM2) vorgesteuerten Phasenästen (B1, B2), des Erzeugens der Pulsbreitenmodulations-Ansteuersignale (PWM1, PMW2), die den jeweiligen Modulationspegel (DC1, DC2) durch Vergleichen einer Referenzspannung (Vref1, Vref2) mit einem von dem Ausgang des Wandlergerätes zurückgesendeten Rückführsignal (D; D'; D'') steuern, wobei der Vorgang des Steuerns des Modulationspegels die Festlegung mindestens eines Master-Astes (B1) in der Vielzahl der Phasenäste und eines oder mehr Slave-Äste (B2) beinhaltet, wobei jede der Steuerungsvorrichtungen (12, 22) mit einer jeweiligen internen Referenzspannung (Vref1, Vref2) an einer zweiten Klemme versorgt wird, **dadurch gekennzeichnet, dass**
es das Erhalten (F1, F2; P1, P2) von Schätzsignalen (DC1, DC2; CS1, CS2) der Vergleichssignale (E1, E2) des Master-Astes (B1) bzw. eines oder mehr der Slave-Äste (B2) beinhaltet,
es (11) einen Rückführregelkreis betreibt, der Schätzsignale (DC1, DC2; SC1, SC2) der Vergleichssignale (E1, E2) empfängt, um die Unterschiede zwischen den Vergleichssignalen (E1, E2) auf Null zu verringern, mit Bereitstellung eines Steuerungssignals (D'; D'') als Rückführsignal für die Erzeugung des Ansteuersignals (PWM2) des Slave-Astes (B2).

13. Verfahren nach Anspruch 12, **dadurch gekennzeichnet, dass** es das Betreiben des Rückführregelkreises (11) unter Verwendung des Schätzsignals (DC1; CS1) des Vergleichssignals (E1) der Master-Vorrichtung (12) als Referenzsignal für den Rückführkreis (11) beinhaltet.

14. Verfahren nach Anspruch 12 oder 13, **dadurch gekennzeichnet, dass** der Vorgang des Erhaltens (F1, F2; P1, P2) von Schätzsignalen (DC1, DC2; CS1, CS2) das Schätzen des mit den pulsbreitenmodulierten Ansteuersignalen (PWM1, PWM2) der Master-Vorrichtung (12) bzw. einer oder mehr der Slave-Steuerungsvorrichtungen (22) verbundenen Modulationspegels (DC1, DC2) beinhaltet, und dadurch, dass der Regelkreis (11) als Eingang die Modulationspegel (DC1, DC2) empfängt und eine Rückführung arbeitet, um die Unterschiede zwischen den Modulationspegeln (DC1, DC2) auf Null zu verringern, mit Bereitstellung eines Steuerungssignals (D') als Rückführsignal, das zum Rückführeingang (22a) der Slave-Steuerungsvorrichtung (22) zurückgesendet wird.

15. Verfahren nach Anspruch 12 oder 13, **dadurch gekennzeichnet, dass** der Vorgang des Erhaltens (F1, F2; P1, P2) von Schätzsignalen (DC1, DC2; CS1, CS2) beinhaltet, dass (P1, P2) die Vergleichssignale (E1, E2) herausgezogen und als entsprechende Signale zum Vergleich (CS1, CS2) als Eingang dem Regelkreis (11) zugeführt werden, wobei eine Rückführung arbeitet, um die Unterschiede zwischen den Vergleichssignalen (E1, E2) auf Null zu verringern, mit Bereitstellung eines Steuerungssignals (D'') als Rückführsignal, das zum Rückführeingang (22a) der Slave-Steuerungsvorrichtung (22) zurückgesendet wird.

**Revendications**

1. Appareil convertisseur CC-CC avec architecture multiphases, comprenant :

   - plusieurs branches de phase (B1, B2) disposées de manière à recevoir des signaux d'actionnement respectifs (PWM1, PWM2) depuis des dispositifs de commande correspondants (12, 22) conçus pour générer lesdits signaux d'actionnement modulés en largeur d'impulsion (PWM1, PWM2) ;
   - chacun desdits dispositifs de commande (12, 22) comprenant un module de circuit respectif (Ael, Ae2) conçu pour :
   - comparer une tension de référence interne (Vref1, Vref2) à un signal retour (D ; D' ; D'') renvoyé vers une entrée de retour (12a, 22a) depuis une sortie de l'appareil convertisseur ; et
   - fournir un signal de comparaison (E1, E2) afin de commander un niveau de modulation appliqué au signal d'actionnement respectif (PWM1, PWM2) ;
   - au moins un dispositif de commande (12) parmi lesdits dispositifs de commande correspondants (12) fonctionnant en qualité de maître par rapport à ladite opération consistant à fournir un signal de comparaison (E1, E2) permettant de commander un niveau de modulation, tandis que le reste parmi lesdits dispositifs de commande correspondants (22) fonctionne par rapport à ladite opération consistant à fournir un signal de comparaison (E1, E2) en mode esclave par rapport audit dispositif de commande maître (12) ;
   - chacun desdits dispositifs de commande (12, 22) recevant la tension de référence interne respective (Vref1, Vref2) au niveau d'une seconde borne ; et **caractérisé en ce que** :
   - ledit appareil convertisseur comprend également un système de circuit (F1, F2 ; P1, P2) conçu pour obtenir des signaux d'estimateur (DC1, DC2 ; CS1, CS2) desdits signaux de comparaison (E1, E2) ;
   - une boucle de commande (11) recevant en entrée lesdits signaux d'estimateur desdits signaux de comparaison (DC1, DC2 ; CS1, CS2) et agissant en retour pour réduire à zéro les différences entre lesdits signaux de comparaison (E1, E2) fournissant un signal de commande (D' ; D'') en qualité de signal retour renvoyé à l'entrée de retour (22a) dudit dispositif de commande esclave (22).

2. Appareil selon la revendication 1, **caractérisé en ce que** ladite boucle de commande (11) reçoit un signal d'estimateur du signal de comparaison (DC1 ; CS1) du dispositif maître (12) en qualité de signal de référence.

3. Appareil selon la revendication 2, **caractérisé en ce que** ladite boucle de commande de retour (11) comprend un amplificateur fonctionnel (A1) recevant, à une borne d'inversion, le signal d'estimateur du signal de comparaison (DC1 ; CS1) qui commande le signal d'actionnement (PWM1) du dispositif de commande maître (12) et, vers une borne de non-inversion, le signal d'estimateur du signal de comparaison (DC2 ; CS2) qui commande le signal d'actionnement (PWM2) du dispositif de commande esclave (22).

4. Appareil selon une ou plusieurs des revendications précédentes, **caractérisé en ce que** lesdits dispositifs de commande (12, 22) comprennent une boucle d'ajustement de courant interne (I1, I2).

5. Appareil selon une ou plusieurs des revendications précédentes, **caractérisé en ce que** ledit module de circuit (Ael, Ae2) configuré pour comparer une tension de référence (Vref1, Vref2) à un signal retour (D ; D' ; D'') renvoyé vers une entrée de retour (12a, 22a) depuis une sortie de l'appareil convertisseur comprend un amplificateur de tension.

6. Appareil selon une ou plusieurs des revendications précédentes, **caractérisé en ce que** ledit système de circuit (F1, F2 ; P1) conçu pour obtenir des signaux d'estimateur (DC1, DC2 ; CS1, CS2) desdits signaux de comparaison (E1, E2) comprend des moyens (F1, F2) pour estimer les niveaux de modulation associés auxdits signaux d'actionnement modulés en largeur d'impulsion (PWM1, PWM2) du dispositif maître (12) et des dispositifs de commande restants (22), respectivement, et **en ce que** ladite boucle de commande (11) reçoit comme entrée lesdits niveaux de modulation et agit en retour pour réduire à zéro les différences entre lesdits niveaux de modulation (DC1, DC2) fournissant un signal de commande (D') en qualité de signal retour renvoyé vers l'entrée de retour (22a) dudit dispositif de commande esclave (22).

7. Appareil selon la revendication précédente, **caractérisé en ce que** lesdits moyens (F1, F2) pour estimer les niveaux de modulation (DC1, DC2) associés auxdits signaux d'actionnement (PWM1, PWM2) comprennent un réseau de filtrage RC.

8. Appareil selon une ou plusieurs des revendications précédentes 1 à 5, **caractérisé en ce que** ledit système de circuit (F1, F2 ; P1) conçu pour obtenir des signaux d'estimateur (DC1, DC2 ; CS1, CS2) desdits signaux de comparaison (E1, E2) comprend un circuit d'extraction (P1, P2) conçu pour extraire lesdits signaux de comparaison (E1, E2) en sortie depuis ledit module de circuit respectif (Ael, Ae2) et fournir des signaux correspondants pour la comparaison (CS1, CS2) en entrée vers ladite boucle de commande (11) agissant en retour pour réduire à zéro les différences entre lesdits signaux de comparaison (E1, E2) fournissant un signal de commande (D'') en qualité de signal retour renvoyé vers l'entrée de retour (22a) dudit dispositif de commande esclave (22).

9. Appareil selon la revendication précédente, **caractérisé en ce que** lesdits signaux de comparaison (E1, E2) représentent des consignes de schéma de commande de type mode de courant de deux boucles de courant de commutation de pic.

10. Appareil selon la revendication 6 ou 8, **caractérisé en ce que** ledit module de circuit (Ael, Ae2) conçu pour comparer une tension de référence (Vref1, Vref2) à un signal retour (D ; D'') comprend un amplificateur d'erreur (Ael, Ae2) et **en ce que** ladite entrée de retour (12a, 22a) est une entrée dudit amplificateur d'erreur (Ael, Ae2).

11. Appareil selon la revendication précédente, **caractérisé en ce que** chacun desdits dispositifs de commande (12, 22) comprend un dispositif modulateur respectif (13, 23) recevant dudit amplificateur d'erreur (Ael, Ae2) un signal de comparaison respectif (E1, E2) et générant ledit signal d'actionnement respectif (PWM1, PWM2) sous le contrôle d'un signal d'horloge respectif (CLK1, CLK2).

12. Procédé de conversion CC-CC avec architecture multiphases comprenant les opérations consistant à répartir une charge sur plusieurs branches de phase (B1, B2) pilotées par des signaux d'actionnement respectifs (PWM1, PWM2), à générer lesdits signaux d'actionnement à modulation en largeur d'impulsion (PWM1, PWM2) commandant le niveau de modulation respectif (DC1, DC2) en comparant une tension de référence (Vref1, Vref2) à un signal retour (D ; D' ; D'') renvoyé de la sortie de l'appareil convertisseur, ladite opération de commande de niveau de modulation comprenant la définition d'au moins une branche maître (B1) dans lesdites plusieurs branches de phase et d'une ou plusieurs branches esclaves (B2), et à envoyer à chacun desdits dispositifs de commande (12, 22) une tension de référence interne respective (Vref1, Vref2), à une seconde borne ; **caractérisé en ce que** :

   - il consiste à obtenir (F1, F2 ; P1, P2) des signaux d'estimateur (DC1, DC2 ; CS1, CS2) desdits signaux de comparaison (E1, E2) de la branche maître (B1) et d'une ou de plusieurs des branches esclaves (B2), respectivement ;
   - il actionne (11) une boucle de commande de retour recevant des signaux d'estimateur (DC1, DC2 ; CS1, CS2) desdits signaux de comparaison (E1, E2) afin de réduire à zéro les différences entre lesdits signaux de comparaison (E1, E2) fournissant un signal de commande (D' ; D'') en qualité de signal retour pour la génération du signal d'actionnement (PWM2) de la branche esclave (B2).

13. Procédé selon la revendication 12, **caractérisé en ce qu'**il consiste à actionner ladite boucle de commande de retour (11) en utilisant le signal d'estimateur (DC1 ; CS1) du signal de comparaison (E1) du dispositif maître (12) en qualité de signal de référence pour la boucle de retour (11).

14. Procédé selon les revendications 12 ou 13, **caractérisé en ce que** ladite opération consistant à obtenir (F1, F2 ; P1, P2) des signaux d'estimateur (DC1, DC2 ; CS1, CS2) consiste à estimer le niveau de modulation (DC1, DC2) associé auxdits signaux d'actionnement modulés en largeur d'impulsion (PWM1, PWM2) du dispositif maître (12) et d'un ou de plusieurs des dispositifs de commande esclaves (22), respectivement, et **en ce que** ladite boucle de commande (11) reçoit comme entrée lesdits niveaux de modulation (DC1, DC2) et agit en retour pour réduire à zéro les différences entre lesdits niveaux de modulation (DC1, DC2) fournissant un signal de commande (D') en qualité de signal retour renvoyé vers l'entrée de retour (22a) dudit dispositif de commande esclave (22).

15. Procédé selon les revendications 12 ou 13, **caractérisé en ce que** l'opération consistant à obtenir (F1, F2 ; P1, P2) des signaux d'estimateur (DC1, DC2 ; CS1, CS2) consiste à extraire (P1, P2) lesdits signaux de comparaison (E1, E2) et à les envoyer en qualité de signaux correspondants pour comparaison (CS1, CS2) en entrée vers ladite boucle de commande (11) agissant en retour pour réduire à zéro les différences entre lesdits signaux de comparaison (E1, E2) fournissant un signal de commande (D'') en qualité de signal retour renvoyé vers l'entrée de retour (22a) dudit dispositif de commande esclave (22).

Fig. 1

Fig. 2

EP 2 096 745 B1

Fig. 3

Fig. 4

EP 2 096 745 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5122726 A

**Non-patent literature cited in the description**

- Analysis and evaluation of current-sharing control for parallel-connected DC-DC converters taking into account cable resistance. **SIRI et al.** AEROSPACE APPLICATION CONFERENCE, 1995. PROCEEDINGS. IEEE, 04 February 1995, 29-48